# EUROPÄISCHE PATENTSCHRIFT

(11) **EP 2 688 171 B1**
(45) Veröffentlichungstag und Bekanntmachung des Hinweises auf die Patenterteilung: **11.09.2019**
(21) Anmeldenummer: 13169130.5
(22) Anmeldetag: 24.05.2013
(51) Int. Cl.: H01M 10/44, H01M 10/46, H02J 1/14, H02J 3/32, H02J 3/38, H02J 7/35, H01M 10/0525, H01M 10/06, H02J 7/00

(54) **Energiespeicher für Photovoltaikanalage, Energiespeicherkraftwerk, Steuereinrichtung und Verfahren zum Betreiben eines Energiespeichers**
Energy storage for photovoltaic facility, energy storage power plant, control device and method for operating an energy storage device
Accumulateur d'énergie pour installation photovoltaïque, centrale d'accumulation d'énergie, appareil de commande et procédé de fonctionnement d'un accumulateur d'énergie

(30) Priorität: 19.07.2012 DE 102012212654
(43) Veröffentlichungstag der Anmeldung: 22.01.2014
(73) Patentinhaber: Robert Bosch GmbH, 70442 Stuttgart (DE)
(72) Erfinder: Belschner, Werner, 74544 Michelbach an der Bilz (DE)

(56) Entgegenhaltungen:
- EP-A1- 2 348 569
- EP-A1- 2 475 068
- US-A1- 2011 140 667
- US-A1- 2012 130 556
- Raphael Hollinger ET AL: "Speicherstudie 2013", , 1. Januar 2013 (2013-01-01), XP055085161, Gefunden im Internet: URL:http://www.ise.fraunhofer.de/de/veroef fentlichungen/studien-und-positionspapiere /speicherstudie-2013 [gefunden am 2013-10-24]

## Beschreibung

Die vorliegende Erfindung betrifft einen Energiespeicher für eine Photovoltaikanalage, ein Energiespeicherkraftwerk, eine Steuereinrichtung und ein Verfahren zum Betreiben eines Energiespeichers.

### Stand der Technik

Herkömmliche Stromnetze basieren auf wenigen zentralisierten Kraftwerken, die die Endverbraucher mit Hilfe der installierten Übertragungs- und Verteilungsnetze versorgen. Dieses traditionelle System hat der Gesellschaft bei der Bereitstellung einer sicheren und zuverlässigen Stromversorgung gute Dienste geleistet. Der jedoch immer stärker werdende politische und ökologische Druck, die Nutzung von erneuerbaren Energiequellen auszuweiten, verlangt nach einem neuen Modell von Energieversorgung. Diese neue Energieversorgung muss flexibel und intelligent sein, damit es Strommengen jeder Qualität und Größe aus den verschiedensten Quellen liefern und diese bedarfsabhängig so steuern kann, dass eine zuverlässige Verbraucherversorgung jederzeit gewährleistet ist.

In der Vergangenheit hat sich die Forschung und Entwicklung vorwiegend auf ökologische Stromerzeugung sowie intelligente Mess- und Informationstechnologie konzentriert. Es wird jedoch immer deutlicher, dass zu einer wirklich guten Energieversorgung auch ein Energiespeicher verwendet werden sollte, welcher in der Lage ist, Energie aus erneuerbaren Energien zwischen zu speichern und bei Bedarf in das Energieversorgungsnetz einzuspeisen.

Ein Energiespeicher sollte aus Lebensdauergründen nur in bestimmten Ladezuständen (SOC = State of Charge) bzw. innerhalb eines Ladungsfensters betrieben werden. Je nach Energiespeichertyp gibt es tiefe und/oder hohe Ladezustände in denen der Energiespeicher nicht betrieben werden sollte. Typische Werte liegen je nach Batterietyp bei ca. 20 bis 50% der Nennkapazität.

Die DE 10 2010 062 698 A1 betrifft ein Photovoltaikmodul sowie ein Verfahren zur Steuerung eines Photovoltaikmoduls. Dieses Photovoltaikmodul mit einem Anschluss zur direkten Energieabgabe an einen Kunden umfasst eine Steuerung mit einem Schalter zur Aktivierung und Deaktivierung der direkten Energieabgabe. Dabei umfasst die Steuerung ferner ein mit dem Schalter gekoppeltes Telekommunikationsmodul, das von dem Kunden über ein Telefon anwählbar ist, wobei das Telekommunikationsmodul dazu ausgebildet ist, den Schalter anzusteuern und eine bedarfsweise Aktivierung bzw. Deaktivierung der Energieabgabe zu ermöglichen.

Die US 2012/130556 A1 zeigt einen Energiespeicher und ein Verfahren zum Betreiben eines Energiespeichers.

### Offenbarung der Erfindung

Die vorliegende Erfindung offenbart einen elektrischen Akkumulator mit den Merkmalen des Patentanspruchs 1, ein Energiespeicherkraftwerk mit den Merkmalen des Patentanspruchs 5 sowie ein Verfahren zum Betreiben eines Energiespeichers mit den Merkmalen des Patentanspruchs 6.

Demgemäß ist vorgesehen:
Ein elektrischer Akkumulator für eine Photovoltaikanlage, mit einem ersten Kapazitätsbereich, welcher, ausschließlich, für Netzeinspeisung bereitgestellt ist, mit einem zweiten Kapazitätsbereich, welcher für

Eigenverbrauch und Netzeinspeisung bereitgestellt ist, mit einem von dem ersten verschiedenen dritten Kapazitätsbereich, welcher, ausschließlich, für Netzeinspeisung bereitgestellt ist. Ferner ist ein virtuelles Energiespeicher-Kraftwerk vorgesehen, mit einer Vielzahl von elektrischen Akkumulatoren gemäß der Erfindung, welche mit einer zentralen Steuervorrichtung gekoppelt sind, wobei die zentrale Steuervorrichtung ausgebildet ist, für einzelne und/oder eine Gruppe der Vielzahl von elektrischen Akkumulatoren eine positive oder negative Energiemenge für Netzeinspeisung für ein Zeitfenster zu einer Zeit festzulegen.

Des Weiteren wird ein Verfahren mit folgenden Verfahrensschritten zum Betreiben eines elektrischen Akkumulators gemäß der Erfindung zur Verfügung gestellt:
Messen eines Ist-Ladezustands des elektrischen Akkumulators Festlegen einer positiven oder negativen Energiemenge des elektrischen Akkumulators für Netzeinspeisung für ein Zeitfenster zu einer Zeit;
Anpassen des Ist-Ladezustands des elektrischen Akkumulators unter Verwendung des ersten Kapazitätsbereichs, des zweiten Kapazitätsbereichs und des dritten Kapazitätsbereichs des elektrischen Akkumulators zu der Zeit derart, dass die Energiemenge für die Netzeinspeisung für das Zeitfenster zu der Zeit von dem elektrischen Akkumulator bereitstellbar ist.

### Vorteile der Erfindung

Die der vorliegenden Erfindung zu Grunde liegende Erkenntnis besteht darin, die normalerweise ungenutzten Bereiche der Kapazität des Energiespeichers für Netzdienstleistungen nutzbar zu machen, welche vorwiegend auf bezahlte Leistungsbereitstellung abzielen, z. B. Minutenreserve innerhalb von Stunden-Zeitscheiben. Bei diesen Netzdienstleistungen ist seitens des Betreibers des Energiespeichers eine positiv Leistung, also eine Einspeisung von elektrischer Leistung von dem Energiespeicher in das öffentliche Energieversorgungsnetz, oder eine negative Leistung, also eine Aufnahme von Energie aus dem öffentlichen Energieversorgungsnetz, zu garantieren. Meist werden allerdings nur geringe Energiemengen abgerufen. Diese leistungsbezogene Netzdienstleistungen in kurzen Zeitscheiben können somit im tiefen und/oder hohen Ladezustandsbereich, also im ersten und dritten Kapazitätsbereich des Energiespeichers mit geringen negativen Auswirkungen auf die Lebensdauer des Energiespeichers erbracht werden.

Aufgrund der geforderten hohen Leistungswerte bei Netzdienstleistungen können die dezentralen Energiespeicher im virtuellen Verbund als virtuelles Energiespeicherkraftwerk betrieben werden.

Der Vorteil der Erfindung liegt in der wirtschaftlichen Nutzung von tiefen und/oder hohen Kapazitätsbereichen für leistungsbezogene Netzdienstleistungen in kurzen Zeitscheiben, die im Normalbetrieb nicht nutzbar sind. Damit können zusätzliche Einnahmen generiert werden und sich somit die Investition in den Energiespeicher und die Photovoltaikanlage früher lohnen.

Vorteilhafte Ausführungsformen und Weiterbildungen ergeben sich aus den Unteransprüchen sowie aus der Beschreibung unter Bezugnahme auf die Figuren.

Gemäß der Erfindung sind ein vierter Kapazitätsbereich und eine fünfter Kapazitätsbereich in dem Energiespeicher vorgesehen, welche gesperrt sind. Der vierte Kapazitätsbereich und der fünfte Kapazitätsbereich sind weder für den Normalbetrieb noch für die Netzeinspeisung nutzbar. Beispielsweise ist der vierte Kapazitätsbereich im unteren Kapazitätsbereich des Energiespeichers vorgesehen und der fünfte Kapazitätsbereich ist im oberen Kapazitätsbereich des Energiespeichers vorgesehen. Z. B. beträgt der vierte Kapazitätsbereich 0% bis 10% und der fünfte Kapazitätsbereich 90% bis 100% der Kapazität des Energiespeichers. Durch diese Ausbildung des Energiespeichers kann die Lebensdauer und die Leistung des Energiespeichers signifikant verbessert werden.

Die gesperrten Kapazitätsbereiche, also der vierte und fünfte Kapazitätsbereich, sind weder für den Normalbetrieb noch für Netzdienste freigegeben. Der eingeschränkt freigegebene Kapazitätsbereich, also der erste und der dritte Kapazitätsbereich sind nur für leistungsabhängige Netzdienstleistungen in kurzer Zeitscheibe freigegeben. Der freigegebene Kapazitätsbereich, also der zweite Kapazitätsbereich, entspricht dem Bereich der von den Energiespeicherherstellern für den Normalbetrieb und ggf. Netzbetrieb gemäß Datenblatt nutzbar ist.

In einer weiteren Ausführungsform der Erfindung weist der Energiespeicher eine Steuereinrichtung auf, welche ausgebildet ist, einen Ist-Ladezustand des Energiespeichers derart anzupassen, dass eine festgelegte positive oder negative Energiemenge für Netzeinspeisung für ein festgelegtes Zeitfenster zu einer festgelegten Zeit von dem Energiespeicher bereitstellbar ist.

In einer weiteren Ausführungsform ist die Steuereinrichtung ausgebildet, unter Berücksichtigung vergangener Lastgänge des Eigenverbrauchs und/oder einer Ertragsprognose der Photovoltaikanlage den Ist-Ladezustand des Energiespeichers anzupassen. Auf diese Weise kann der Energiespeicher noch effizienter und wirtschaftlicher betrieben werden.

Gemäß der Erfindung beträgt der erste Kapazitätsbereich 10% bis 40% der Kapazität des Energiespeichers, der zweite Kapazitätsbereich 40% bis 80% der Kapazität des Energiespeichers, und der dritte Kapazitätsbereich 80% bis 90% der Kapazität des Energiespeichers. Andere Bereiche sind ebenfalls möglich und können je nach Ausbildung des Energiespeichers angepasst werden. Beispielsweise kann der erste Kapazitätsbereich bei einem als Lithium-Ionen-Akkumulator ausgebildeten Energiespeicher 20% bis 50%, der zweite Kapazitätsbereich 50% bis 70%, und der dritte 70% bis 80% der Kapazität des Energiespeichers betragen.

In einer weiteren Ausführungsform ist der Energiespeicher als elektrischer Akkumulator, insbesondere als Blei-Akkumulator oder als Lithium-Ionen-Akkumulator ausgebildet ist. Ein als Blei-Akkumulator ausgebildeter Energiespeicher bietet ein gutes Preisleistungsverhältnis und ist bei entsprechender Wartung und Pflege sehr zuverlässig. Ein als Lithium-Ionen-Akkumulator ausgebildeter Energiespeicher hat den Vorteil einer hohen Leistungsfestigkeit bei gutem Wirkungsgrad und langer Lebensdauer.

Gemäß einer weiteren Ausführungsform der Erfindung ist der Energiespeicher als elektrischer Akkumulator, z.B. als Bleissäure-Akkumulator, Blei-Gel-Akkumulator, Blei-Vlies-Akkumulator, Li-Ion -Lithium-Cobaltdioxid-Akkumulator, Lithium-Polymer-Akkumulator, Lithium-Mangan-Akkumulator, Lithium-Eisenphosphat-Akkumulator, Lithium-Eisen-Yitrium-Phosphat-Akkumulator, Lithium-Titanat-Akku, Lithium-Schwefel-Akkumulator, Lithium-Metall-Polymer-Akku , Natrium-Nickelchlorid-Hochtemperatur-Batterie, Natrium-Schwefel-Akkumulator, Nickel-Cadmium-Akku, Nickel-Eisen-Akku , Nickel-Wasserstoff-Akkumulator, Nickel-Metallhydrid-Akkumulator, Nickel-Zink-Akkumulator, Silber-Zink-Akku, Vanadium-Redox-Akkumulator und/oder Zink-Brom-Akku ausgebildet.

In einer weiteren Ausführungsform weist die Steuereinrichtung eine Kommunikationsschnittstelle auf, welcher mit der zentralen Steuervorrichtung gekoppelt ist. Die zentrale Steuervorrichtung kann dadurch mittels einer Handshake Funktion bei einer Vielzahl von dezentral angeordneten Energiespeichern eine Netzdienstleistung anfordern. Die Steuereinrichtungen der Energiespeicher melden die verfügbare Leistung sowie Zeitscheibe zurück und garantieren die Verfügbarkeit für einen bestimmten Zeitpunkt, beispielsweise 5 kW Minutenreserve für eine Stunde am nächsten Tag nach Abruf. Dabei kann auch der zweite Kapazitätsbereich im Normalbetrieb verwendet werden. In diesem Fall muss jedoch der Ladezustand des Energiespeichers derart geregelt werden, dass die garantierte Leistung bereitstellbar ist. Die Entscheidung für bzw. gegen die Verwendung von dem zweiten Kapazitätsbereich des Normalbetriebs könnte durch Lastgang- und Wetterprognose präzisiert werden.

In einer weiteren Ausführungsform werden der erste und der dritte Kapazitätsbereich unter Berücksichtigung einer Bedingung, beispielsweise eines Messwertes oder eines vorgegeben Schwellenwertes der Leistungsvergütung der Netzdienstleistung, freigegeben oder gesperrt. Beispielsweise kann ein Benutzer des Energiespeichers einen Schwellenwert in der Steuervorrichtung des Energiespeichers festlegen, ab dem der erste und dritte Kapazitätsbereich verwendbar sind. Auf diese Weise kann der Energiespeicher besonders komfortabel und wirtschaftlich betrieben werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung eines Energiespeichers gemäß einer Ausführungsform der vorliegenden Erfindung;
- Fig. 2: eine schematische Darstellung eines Energiespeichers einer Photovoltaikanalage gemäß einer Ausführungsform der vorliegenden Erfindung;
- Fig. 3: eine schematische Darstellung eines Energiespeicherkraftwerks gemäß einer Ausführungsform der vorliegenden Erfindung;
- Fig. 4: ein schematisches Diagramm, welches den zeitlichen Verlauf des Ladezustands eines Energiespeichers gemäß einer Ausführungsform der vorliegenden Erfindung darstellt;
- Fig. 5: ein schematisches Diagramm, welches den zeitlichen Verlauf des Ladezustands eines Energiespeichers gemäß einer weiteren Ausführungsform der vorliegenden Erfindung darstellt;
- Fig. 6: ein schematisches Diagramm, welches den zeitlichen Verlauf des Ladezustands eines Energiespeichers gemäß einer weiteren Ausführungsform der vorliegenden Erfindung darstellt.

In allen Figuren sind gleiche bzw. funktionsgleiche Elemente und Vorrichtungen - sofern nichts anderes angegeben ist - mit denselben Bezugszeichen versehen.

### Ausführungsformen der Erfindung

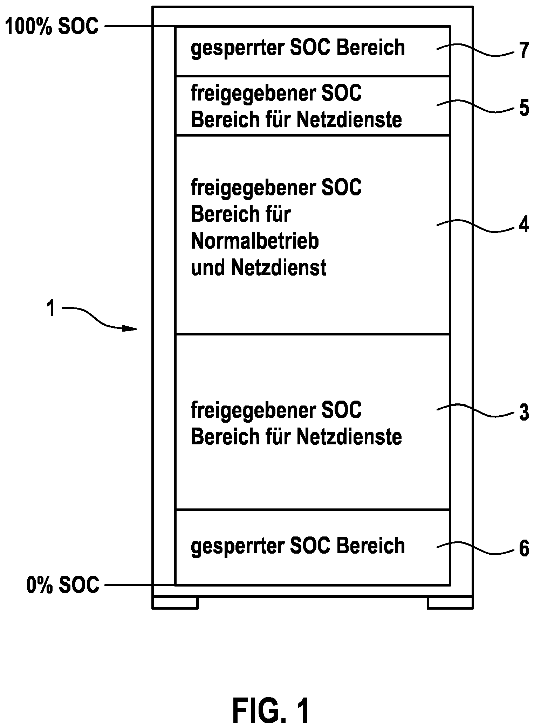

Fig. 1 zeigt eine schematische Darstellung eines Energiespeichers 1 gemäß einer Ausführungsform der vorliegenden Erfindung. Der Energiespeicher 1 ist beispielsweise ein elektrischer Akkumulator für eine Photovoltaikanlage 2. Der Energiespeicher 1 weist eine Kapazität auf, welche die Menge an elektrischer Ladung angibt, die der Energiespeicher speichern kann. Beispielsweise ist der ist der in Fig. 1 dargestellte Energiespeicher ein Lithium-Ionen-Akkumulator und weist eine Kapazität von 10 kWh auf. Auf der linken Seite des Energiespeichers 1 ist schematische eine Skala dargestellt, welche den Ladezustand des Energiespeichers 1 in Prozent darstellt. Wenn der Energiespeicher 1 z. B. einen Ladezustand von 50% aufweist, sind in dem Energiespeicher 5 kWh gespeichert.

Der Energiespeicher 1 weist einen ersten Kapazitätsbereich 3 auf, welcher für Netzeinspeisung bereitgestellt ist. Das bedeutet, dass dieser Kapazitätsbereich 3 für Netzeinspeisung reserviert ist. Der erste Kapazitätsbereich 3 kann demnach nicht für den Eigenverbrauch verwendet werden. Der erste Kapazitätsbereich 3 weist beispielsweise einen Kapazitätsbereich von etwa 10 % bis 40 % der augenblicklichen Gesamtkapazität des Energiespeichers 1 auf.

Ferner weist der Energiespeicher 1 einen zweiten Kapazitätsbereich 4 auf, welcher sowohl für Netzdienstleistungen als auch für die Zwischenspeicherung von elektrischer Energie zum Eigenverbrauch verwendbar ist. Der zweite Kapazitätsbereich 4 umfasst in dieser Ausführungsform beispielsweise einen Kapazitätsbereich von 40 % bis 80 % der augenblicklichen Gesamtkapazität des Energiespeichers 1.

Des Weiteren weist der Energiespeicher 1 einen dritten Kapazitätsbereich 5 auf, welcher ausschließlich für Netzeinspeisung bereitgestellt ist. Dieser Kapazitätsbereich 5 ist, ebenso wie der erste Kapazitätsbereich, für Netzdienstleistungen, beispielsweise für positive oder negative Netzeinspeisung von elektrischer Energie vorgesehen. Der dritte Kapazitätsbereich 5 weist z. B. einen Kapazitätsbereich von 80% bis 90 % der Kapazität des Energiespeichers 1 auf.

Ferner weist der Energiespeicher 1 einen vierten Kapazitätsbereich 6 und einen fünften Kapazitätsbereich 7 auf. Der vierte Kapazitätsbereich 6 weist z. B. einen Kapazitätsbereich von 0% bis 10 %, und der fünfte Kapazitätsbereich z. B. 90% bis 100% der augenblicklichen Gesamtkapazität des Energiespeichers 1 auf. Der vierte Kapazitätsbereich 6 und der fünfte Kapazitätsbereich 7 ist weder für Netzdienstleistungen, wie z. B. positive oder negative Einspeisung von elektrischer Energie in das öffentliche Energieversorgungsnetz, noch für die Zwischenspeicherung von Energie zum Eigenverbrauch verwendbar. Ein Laden oder Entladen des Energiespeichers 1 bis in diese Kapazitätsbereiche würde die Lebensdauer und die Leistung des Energiespeichers 1 signifikant reduzieren.

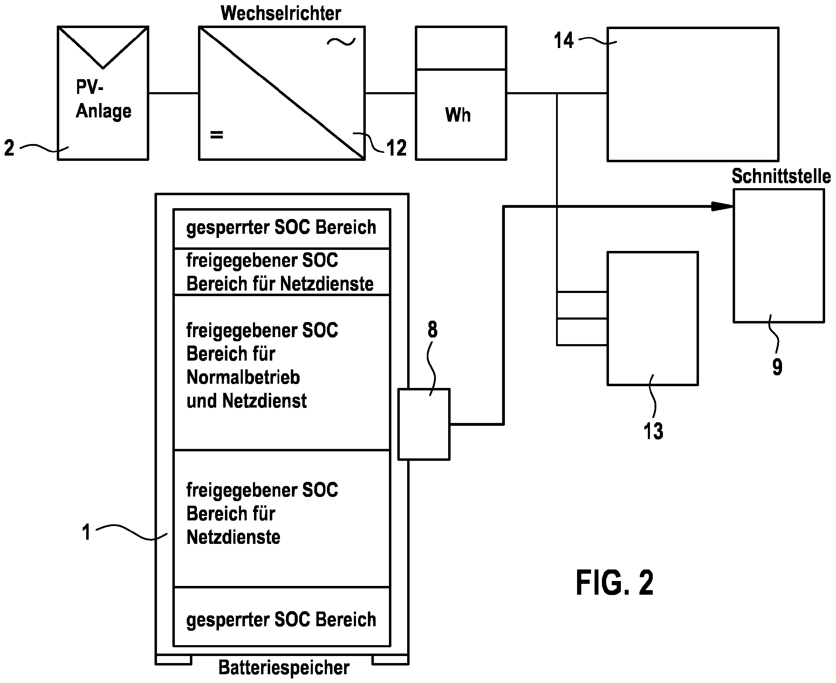

Fig. 2 zeigt eine schematische Darstellung eines Energiespeichers 1 mit einer Photovoltaikanalage 2 gemäß einer Ausführungsform der vorliegenden Erfindung. Der Energiespeicher 1 ist hier ein Teil eines Photovoltaiksystems eines Gebäudes. Der Energiespeicher 1 ist mit einer Photovoltaikanlage 2 gekoppelt, und ist ausbildet, um die von der Photovoltaikanlage erzeugt elektrische Energie zwischen zu speichern und bei Bedarf an die mit dem Energiespeicher 1 gekoppelten Verbraucher 13 abzugeben.

Des Weiteren ist der Energiespeicher 1 über einen Wechselrichter 12 mit einem öffentlichen Energieversorgungsnetz 14 gekoppelt. Auf diese Weise ist es möglich, elektrische Energie, welche von der Photovoltaikanlage 2 produziert wird oder in dem Energiespeicher 1 zwischen gespeichert ist, in das öffentliche Energieversorgungsnetz 14 einzuspeisen oder elektrische Energie aus dem öffentlichen Energieversorgungsnetz 14 zu entnehmen und in dem Energiespeicher 1 zu speichern.

Ferner weist der Energiespeicher 1 eine Steuereinrichtung 8 auf, welche ausgebildet ist, einen Ist-Ladezustand des Energiespeichers 1 derart anzupassen, dass eine festgelegte positive oder negative Energiemenge von dem Energiespeicher 1 bereitstellbar ist. Beispielsweise kann ein Benutzer oder eine zentrale Steuervorrichtung 9 mit der Steuereinrichtung 8 des Energiespeichers 1 kommunizieren, und beispielsweise eine positive oder negative Netzdienstleistung anfordern.

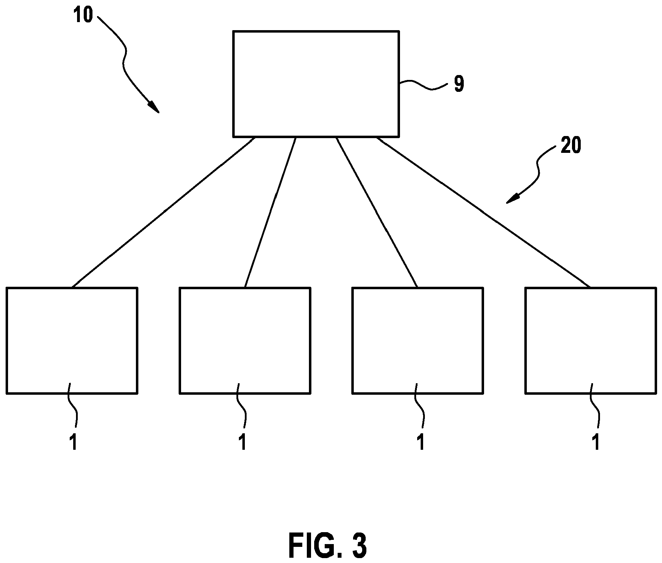

Fig. 3 zeigt eine schematische Darstellung eines virtuellen Energiespeicherkraftwerks 10 gemäß einer Ausführungsform der vorliegenden Erfindung. Das virtuelle Energiespeicherkraftwerk 10 umfasst eine Vielzahl von dezentral angeordneten Energiespeichern 1, welche über ein Kommunikationsnetzwerk 20 mit einer zentralen Steuervorrichtung 9 gekoppelt sind. Die zentrale Steuervorrichtung 9 fordert mittels einer Handshake Funktion bei der Vielzahl von dezentral angeordneten Energiespeichern 1 eine Netzdienstleistung an. Die Steuereinrichtungen 8 der Energiespeicher 1 melden die verfügbare Leistung sowie ein Zeitfenster zurück und garantieren die Verfügbarkeit für einen bestimmten Zeitpunkt, beispielsweise 10 kW Minutenreserve für vier Stunden am nächsten Tag nach Abruf. Durch einen Verbund einer Vielzahl von Energiespeichern 1 kann die Gesamtleistung, welche für die Netzdienstleistung zur Verfügung gestellt werden soll, signifikant gesteigert werden. Auf diese Weise ist es möglich, Netzdienstleistungen im Megawattbereich zur Verfügung zu stellen.

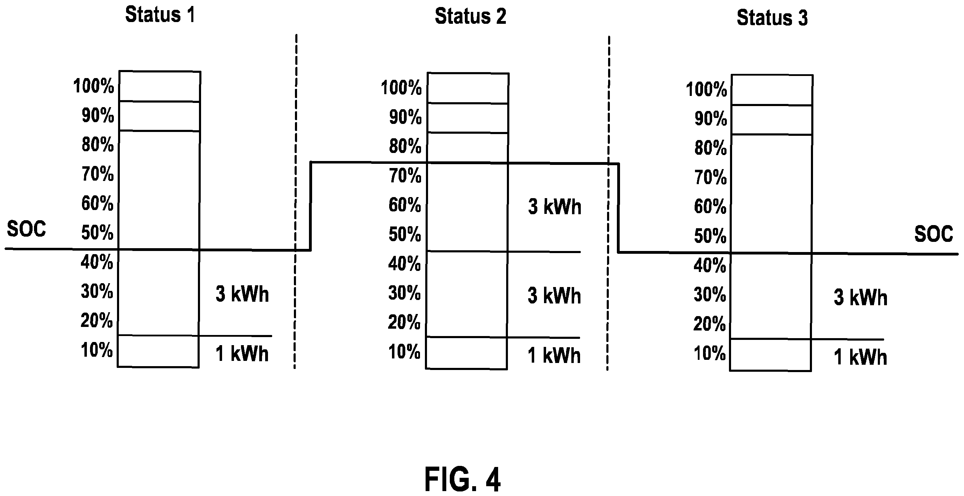

Fig. 4 zeigt ein schematisches Diagramm, welches den zeitlichen Verlauf des Ladezustands eines Energiespeichers 1 gemäß einer Ausführungsform der vorliegenden Erfindung darstellt. Der Energiespeicher 1 weist im Status 1 einen Ladezustand von 40% der Kapazität des Energiespeichers auf. Im Status 1 erfolgt eine Anfrage der zentralen Steuervorrichtung 9 für eine positive Netzeinspeisung von Energie. Die zentrale Steuervorrichtung 9 fordert von dem Energiespeicher 1 beispielsweise, dass eine Leistung von 3kW innerhalb eines Zeitfensters von einer Stunde um sechs Uhr des folgenden Tages vom Energiespeicher 1 bereitzustellen ist. Die Steuereinrichtung 8 des Energiespeichers 1 bestätigt diese Forderung und garantiert der zentralen Steuervorrichtung 9, dass um sechs Uhr des folgenden Tages eine Leistung von 3kW für eine Zeitdauer von einer Stunde von dem Energiespeicher 1 bereitstellbar ist.

Im Status 2 erfolgt eine Ladung des Energiespeichers 1, beispielsweise durch Energie von der Photovoltaikanlage 2 und/oder durch das öffentliche Energieversorgungsnetz. Beispielsweise kann der Energiespeicher 1 durch kostengünstigen Nachtstrom aufgeladen werden. Der Ladezustand des Energiespeichers 1 beträgt nach Ladung 70% der aktuellen Gesamtkapazität des Energiespeichers 1. Die Steuereinrichtung 8 des Energiespeichers 1 steuert den Ladezustand des Energiespeichers 1 derart, dass die geforderte Leistung zu der festgelegten Zeit für eine festgelegte Zeitdauer zu Verfügung gestellt werden kann.

Im Status 3 erfolgt eine Einspeisung von elektrischer Energie aus dem Energiespeicher 1 in das öffentliche Energieversorgungsnetz. Die geforderte Leistung von 3 kW wird innerhalb einer Stunde ab sechs Uhr vollständig in das öffentliche Energieversorgungsnetz eingespeist. Der Ladezustand des Energiespeichers 1 beträgt nach der Entladung 40% der aktuellen Gesamtkapazität des Energiespeichers 1.

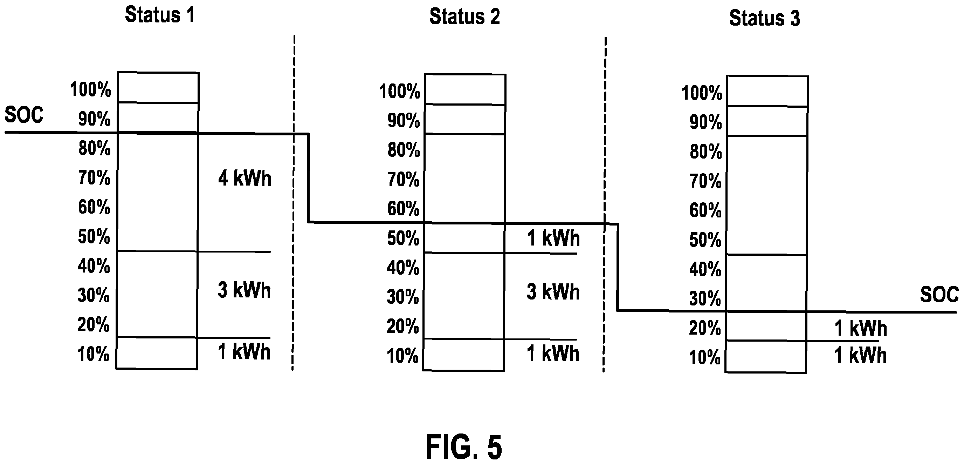

Fig. 5 zeigt ein schematisches Diagramm, welches den zeitlichen Verlauf des Ladezustands eines Energiespeichers 1 gemäß einer Ausführungsform der vorliegenden Erfindung darstellt.

Im Status 1 beträgt der Ladezustand des Energiespeichers 1 80%. Im Status 1 erfolgt eine Anfrage der zentralen Steuervorrichtung 9 für eine positive Netzeinspeisung von Energie. Die zentrale Steuervorrichtung 9 fordert von dem Energiespeicher 1 beispielsweise, dass eine Leistung von 1,5 kW innerhalb eines Zeitfensters von zwei Stunden um 12 Uhr des folgenden Tages vom Energiespeicher 1 bereitzustellen ist. Die Steuereinrichtung 8 des Energiespeichers 1 bestätigt diese Forderung und garantiert der zentralen Steuervorrichtung 9, dass um 12 Uhr des folgenden Tages eine Leistung von 1, 5 kW für eine Zeitdauer von zwei Stunden von dem Energiespeicher 1 bereitstellbar ist.

Im Status 2 erfolgt ein Entladen des Energiespeichers 1 durch die mit dem Energiespeicher 1 gekoppelten Verbraucher. Dieser Verbrauch wird als Eigenverbrauch bezeichnet. Wie man aus der Grafik erkennt, findet der Eigenverbrauch ausschließlich in dem für den Eigenverbrauch vorgesehen zweiten Kapazitätsbereich 4 des Energiespeichers 1 statt.

Im Status 3 erfolgt eine Einspeisung von elektrischer Energie aus dem Energiespeicher 1 in das öffentliche Energieversorgungsnetz. Die geforderte Leistung von 1, 5 kW wird innerhalb zwei Stunden ab 12 Uhr vollständig in das öffentliche Energieversorgungsnetz eingespeist. Der Ladezustand des Energiespeichers 1 beträgt nach der Entladung 20% der aktuellen Gesamtkapazität des Energiespeichers 1.

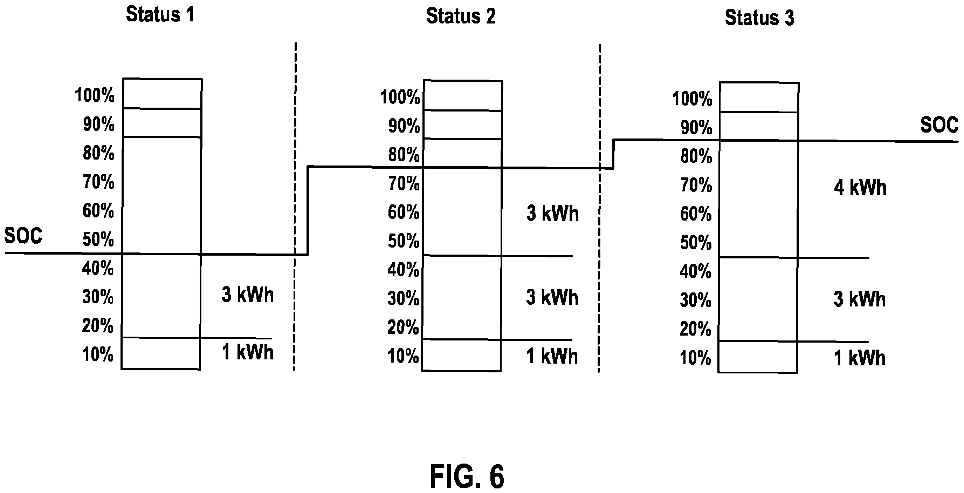

Fig. 6 zeigt ein schematisches Diagramm, welches den zeitlichen Verlauf des Ladezustands eines Energiespeichers 1 gemäß einer Ausführungsform der vorliegenden Erfindung darstellt.

Im Status 1 beträgt der Ladezustand des Energiespeichers 40%. Im Status 1 erfolgt eine Anfrage der zentralen Steuervorrichtung 9 für eine negative Netzeinspeisung von Energie. Dass bedeutet, dass der Energiespeicher 1 Energie aus dem Netz aufnehmen und zwischenspeichern soll. Die zentrale Steuereinrichtung 9 fordert von dem Energiespeicher 1 beispielsweise, dass eine Leistung von 1kW innerhalb eines Zeitfensters von drei Stunden um zwei Uhr des folgenden Tages vom Energiespeicher 1 aufzunehmen ist. Die Steuereinrichtung 8 des Energiespeichers 1 bestätigt diese Forderung und garantiert der zentralen Steuervorrichtung 9, dass um 2 Uhr des folgenden Tages eine Leistung von 1kW innerhalb einer Zeitdauer von drei Stunden von dem Energiespeicher gespeichert wird.

Im Status 2 erfolgt ein Laden des Energiespeichers 1 durch die mit dem Energiespeicher 1 gekoppelten Photovoltaikanlage 2. Der Ladezustand des Energiespeichers 1 beträgt nach dem Laden 80% der Gesamtkapazität.

Im Status 3 erfolgt eine Aufnahme von elektrischer Energie durch den Energiespeicher 1 aus dem öffentlichen Energieversorgungsnetz. Die geforderte negative Leistung von 1 kW wird innerhalb einer Stunde ab zwei Uhr vollständig von dem Energiespeicher 1 gespeichert. Der Ladezustand des Energiespeichers 1 beträgt nach der Aufnahme der Energie aus dem öffentlichen Energieversorgungsnetz 80% der aktuellen Gesamtkapazität des Energiespeichers 1.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der Energiespeicher auch für andere Kraftwerke verwendet werden, welche elektrische Energie aus erneuerbaren Energien gewinnen. Beispielsweise könnte der erfindungsgemäße Energiespeicher auch mit einem Wasserkraftwerk oder einer Windkraftanlage verwendet werden.

## Patentansprüche

1. Elektrischer Akkumulator (1), insbesondere für eine Photovoltaikanlage (2), mit verschiedenen Ladezuständen seiner Kapazität, welche durch eine Steuereinrichtung (8) des elektrischen Akkumulators (1) gesteuert wird,
mit einem ersten Kapazitätsbereich (3), welcher ausschließlich für Netzeinspeisung bereitgestellt ist,
mit einem zweiten Kapazitätsbereich (4), welcher für einen Verbrauch durch angekoppelte Verbraucher und Netzeinspeisung bereitgestellt ist,
mit einem dritten Kapazitätsbereich (5), welcher ausschließlich für Netzeinspeisung bereitgestellt ist
**dadurch gekennzeichnet, dass**
der erste Kapazitätsbereich (3) im tiefen Ladezustandsbereich den Kapazitätsbereich von 10 % bis 40 % der Kapazität des elektrochemischen Energiespeichers umfasst, und
der zweite Kapazitätsbereich (4) den Kapazitätsbereich von 40 % bis 80 % der Kapazität des elektrochemischen Energiespeichers umfasst, und
der dritte Kapazitätsbereich (5) im hohen Ladezustandsbereich den Kapazitätsbereich von 80% bis 90% der Kapazität des elektrochemischen Energiespeichers umfasst,
ein vierter Kapazitätsbereich (6) vorgesehen ist, welcher gesperrt ist, und ein fünfter Kapazitätsbereich (7) vorgesehen ist, welcher gesperrt ist, d.h. weder für den Verbraucher noch für Netzeinspeisung freigegeben ist, und
der vierte Kapazitätsbereich (6) im unteren Ladezustandsbereich den Kapazitätsbereich von 0 % bis 10 % der Kapazität des elektrochemischen Energiespeichers umfasst, und der fünfte Kapazitätsbereich (7) im oberen Ladezustandsbereich den Kapazitätsbereich von 90 % bis 100 % der Kapazität des elektrochemischen Energiespeichers umfasst.

2. Elektrischer Akkumulator (1) nach Anspruch 1,
**dadurch gekennzeichnet,**
**dass** die Steuereinrichtung (8) ausgebildet ist, einen Ist-Ladezustand des elektrischen Akkumulators (1) derart anzupassen, dass eine festgelegte positive oder negative Energiemenge für Netzeinspeisung für ein festgelegtes Zeitfenster zu einer festgelegten Zeit von dem elektrischen Akkumulator (1) bereitstellbar ist.

3. Elektrischer Akkumulator (1) nach Anspruch 2,
**dadurch gekennzeichnet,**
**dass** die Steuereinrichtung (8) ausgebildet ist, unter Berücksichtigung vergangener Lastgänge des Eigenverbrauchs und/oder einer Ertragsprognose der Photovoltaikanlage (2) den Ist-Ladezustand des elektrischen Akkumulators (1) anzupassen.

4. Elektrischer Akkumulator (1) nach einem der vorherigen Ansprüche,
**dadurch gekennzeichnet,**
**dass** der elektrische Akkumulator (1) als Blei-Akkumulator oder als Lithium-Ionen-Akkumulator ausgebildet ist.

5. Energiespeicher-Kraftwerk (10), mit einer Vielzahl von elektrischen Akkumulatoren (1) nach einem der Ansprüche 2 oder 3, welche mit einer zentralen Steuervorrichtung (9) gekoppelt sind,
wobei die zentrale Steuervorrichtung (9) ausgebildet ist, für einzelne und/oder eine Gruppe der Vielzahl von elektrischen Akkumulatoren (1) eine positive oder negative Energiemenge für Netzeinspeisung für ein Zeitfenster zu einer Zeit festzulegen.

6. Verfahren zum Betreiben eines elektrischen Akkumulators (1) nach einem der Ansprüche 1 - 3,
Messen eines Ist-Ladezustands des elektrischen Akkumulators (1);
Festlegen einer positiven oder negativen Energiemenge des Energiespeichers (1) für Netzeinspeisung für ein Zeitfenster zu einer Zeit;
Anpassen des Ist-Ladezustands des elektrischen Akkumulators (1) unter
Verwendung des ersten Kapazitätsbereichs (3), des zweiten Kapazitätsbereichs (4) und des dritten Kapazitätsbereichs (5) des elektrischen Akkumulators (1) zu der Zeit derart, dass die Energiemenge für die Netzeinspeisung für das Zeitfenster zu der Zeit von dem elektrischen Akkumulator (1) bereitstellbar ist.

## Claims

1. Electrical rechargeable battery (1), in particular for a photovoltaic installation (2), having various states of charge of its capacity which is controlled by a control device (8) of the electrical rechargeable battery (1),
having a first capacity range (3) which is provided solely for feeding the mains,
having a second capacity range (4) which is provided for consumption by coupled consumers and for feeding the mains,
having a third capacity range (5) which is provided solely for feeding the mains,
**characterized in that**
the first capacity range (3) in the low state-of-charge range comprises the capacity range from 10% to 40% of the capacity of the electrochemical energy store, and
the second capacity range (4) comprises the capacity range from 40% to 80% of the capacity of the electrochemical energy store, and
the third capacity range (5) in the high state-of-charge range comprises the capacity range from 80% to 90% of the capacity of the electrochemical energy store,
a fourth capacity range (6) is provided and is blocked, and a fifth capacity range (7) is provided and is blocked, that is to say is enabled neither for the consumer nor for feeding the mains, and the fourth capacity range (6) in the lower state-of-charge range comprises the capacity range from 0% to 10% of the capacity of the electrochemical energy store, and
the fifth capacity range (7) in the upper state-of-charge range comprises the capacity range from 90% to 100% of the capacity of the electrochemical energy store.

2. Electrical rechargeable battery (1) according to Claim 1,
**characterized**
**in that** the control device (8) is designed to adapt an actual state of charge of the electrical rechargeable battery (1) in such a manner that a stipulated positive or negative amount of energy for feeding the mains for a stipulated time window at a stipulated time can be provided by the electrical rechargeable battery (1).

3. Electrical rechargeable battery (1) according to Claim 2,
**characterized**
**in that** the control device (8) is designed to adapt the actual state of charge of the electrical rechargeable battery (1) taking into account past load profiles of the self-consumption and/or a yield forecast for the photovoltaic installation (2).

4. Electrical rechargeable battery (1) according to one of the preceding claims,
**characterized**
**in that** the electrical rechargeable battery (1) is in the form of a lead-acid rechargeable battery or a lithium ion rechargeable battery.

5. Energy storage power plant (10),
having a multiplicity of electrical rechargeable batteries (1) according to either of Claims 2 and 3 which are coupled to a central control apparatus (9),
wherein the central control apparatus (9) is designed to stipulate a positive or negative amount of energy for feeding the mains for a time window at a time for individual rechargeable batteries and/or for a group of the multiplicity of electrical rechargeable batteries (1).

6. Method for operating an electrical rechargeable battery (1) according to one of Claims 1-3, measuring an actual state of charge of the electrical rechargeable battery (1);
stipulating a positive or negative amount of energy from the energy store (1) for feeding the mains for a time window at a time;
adapting the actual state of charge of the electrical rechargeable battery (1) using the first capacity range (3), the second capacity range (4) and the third capacity range (5) of the electrical rechargeable battery (1) at the time in such a manner that the amount of energy for feeding the mains for the time window at the time can be provided by the electrical rechargeable battery (1).

## Revendications

1. Accumulateur électrique (1), en particulier pour installation photovoltaïque (2), comportant différents états de charge de sa capacité, qui est contrôlée par un appareil de commande (8) de l'accumulateur électrique (1),
comportant une première plage de capacité (3) qui est mise à disposition exclusivement pour l'alimentation du réseau,
une deuxième plage de capacité (4) qui est mise à disposition pour une consommation par des consommateurs couplés et l'alimentation électrique,
une troisième plage de capacité (5) qui est mise à disposition exclusivement pour l'alimentation du réseau,
**caractérisé en ce que**
la première plage de capacité (3) comprend, dans la plage basse d'état de charge, la plage de capacité représentant 10 % à 40 % de la capacité de l'accumulateur d'énergie électrochimique, et
la deuxième plage de capacité (4) comprend la plage de capacité représentant 40 % à 80 % de la capacité de l'accumulateur d'énergie électrochimique, et
la troisième plage de capacité (5) comprend, dans la plage haute d'état de charge, la plage de capacité représentant 80 % à 90 % de la capacité de l'accumulateur d'énergie électrochimique,
il est prévu une quatrième plage de capacité (6) qui est bloquée, et une cinquième plage de capacité (7) qui est bloquée, c'est-à-dire qui n'est libérée ni pour le consommateur, ni pour l'alimentation du réseau, et
la quatrième plage de capacité (6), dans la plage inférieure d'état de charge, comprend la plage de capacité représentant 0 % à 10 % de la capacité de l'accumulateur d'énergie électrochimique, et
la cinquième plage de capacité (7), dans la plage supérieure d'état de charge, comprend la plage de capacité représentant 90 % à 100 % de la capacité de l'accumulateur d'énergie électrochimique.

2. Accumulateur électrique (1) selon la revendication 1,
**caractérisé en ce que** l'appareil de commande (8) est conçu pour adapter un état de charge réel de l'accumulateur électrique (1) de manière à ce qu'une quantité d'énergie positive ou négative définie pour l'alimentation de réseau pour une fenêtre temporelle définie puisse être mise à disposition pour une durée définie par l'accumulateur électrique (1).

3. Accumulateur électrique (1) selon la revendication 2,
**caractérisé en ce que** l'appareil de commande (8) est conçu pour, en tenant compte des évolutions de charge passées de la consommation spécifique et/ou d'un pronostic de rendement de l'installation photovoltaïque (2), adapter l'état de charge réel de l'accumulateur électrique (1).

4. Accumulateur électrique (1) selon une des revendications précédentes,
**caractérisé en ce que** l'accumulateur électrique (1) est réalisé sous forme d'un accumulateur au plomb ou d'un accumulateur lithium-ion.

5. Centrale électrique à accumulation d'énergie (10) comportant une multitude d'accumulateurs électriques (1) selon une des revendications 2 ou 3 qui sont couplés à un appareil de commande central (9),
dans laquelle l'appareil de commande central (9) est conçu pour établir, pour certains et/ou un groupe de la pluralité d'accumulateurs électriques (1), une quantité d'énergie positive ou négative pour l'alimentation du réseau pour une fenêtre temporelle pendant une certaine durée.

6. Procédé d'utilisation d'un accumulateur électrique (1) selon une des revendications 1 à 3,
la mesure d'un état de charge réel de l'accumulateur électrique (1) ;
la définition d'une quantité d'énergie positive et négative de l'accumulateur d'énergie (1) pour l'alimentation du réseau pour une fenêtre temporelle pendant une certaine durée; l'adaptation de l'état de charge réelle de l'accumulateur électrique (1) en utilisant la première plage de capacité (3), la deuxième plage de capacité (4) et la troisième plage de capacité (5) de l'accumulateur électrique (1) pendant cette durée de manière à ce que la quantité d'énergie pour l'alimentation du réseau pour la plage temporelle puisse être mise à disposition de l'accumulateur électrique (1) pendant cette durée.
